# EUROPÄISCHE PATENTSCHRIFT

(11) **EP 3 787 868 B1**
(45) Veröffentlichungstag und Bekanntmachung des Hinweises auf die Patenterteilung: **01.06.2022**
(21) Anmeldenummer: 19725647.2
(22) Anmeldetag: 26.04.2019
(51) Int. Cl.: B29C 45/33, B29C 45/17, B29C 45/27, B29K 21/00, B29C 45/26

(54) **KALTKANALBLOCK**
COLD RUNNER BLOCK
BLOC POURVU DE CANAUX FROIDS

(30) Priorität: 01.05.2018 DE 102018110427
(43) Veröffentlichungstag der Anmeldung: 10.03.2021
(73) Patentinhaber: Klöckner Desma Elastomertechnik GmbH, 78567 Fridingen (DE)
(72) Erfinder: DUFNER, Manfred, 72505 Krauchenwies (DE)
(74) Vertreter: Schneiders & Behrendt Bochum
(86) Internationale Anmeldenummer: PCT/EP2019/060753
(87) Internationale Veröffentlichungsnummer: WO 2019/211191

(56) Entgegenhaltungen:
- DE-A1- 10 306 876
- DE-A1-102015 013 130
- JP-A- H01 275 115

## Beschreibung

Die Erfindung betrifft einen Kaltkanalblock in einer vertikal arbeitenden Spritzgießmaschine zur Verarbeitung von elastomeren Materialien mit einer oberen feststehenden Formaufspannplatte und einer darunter angeordneten relativ zur feststehenden Formaufspannplatte bewegliche Formaufspannplatte, zwischen denen ein eine Vielzahl von Formnestern aufweisendes Formwerkzeug angeordnet ist und wobei zwischen der feststehenden Formaufspannplatte und dem Formwerkzeug der Kaltkanalblock angeordnet ist, der eine die Kaltkanäle aufweisende Verteilerplatte und eine Düsenplatte beinhaltet, deren Düsen jeweils einem der mehreren Formnester zugeordnet sind.

Bei diesen vorbekannten Kaltkanalsystemen (beispielsweise aus DE 195 22 328 A1 oder US 5 798 127), in welchen Elastomere temperiert auf verschiedene Düsenpositionen verteilt werden, kommt es bei der Umstellung auf ein anderes Elastomer vor, dass die Verteilerkanäle komplett gereinigt werden müssen. Dies geschieht in der Regel außerhalb der Maschine, welches einen gewissen Zeitaufwand mit sich bringt, da der Ausbau des in der Regel gewichtsmäßig schweren Kaltkanalblocks nur mittels eines Krans zu bewerkstelligen ist.

In der DE 10 2015 013130 A1 wird ebenfalls ein Kaltkanalblock der eingangs genannten Art beschrieben.

Daher liegt der Erfindung die Aufgabe zu Grunde, einen Kaltkanalblock der eingangs genannten Art so zu gestalten, dass eine Reinigung der Verteilerplatte bzw. der in dieser Verteilerplatte angeordneten Verteilerkanälen auch in der Maschine bewerkstelligt werden kann. Zur Lösung dieser Aufgabe schlägt die vorliegende Erfindung vor, dass die aus mehreren Verteilerleisten gebildete Verteilerplatte an einer an der feststehenden, angussseitigen Formaufspannplatte befestigbaren Halteplatte angeordnet ist, derart, dass jede Verteilerleiste mittels zweier Bolzen mit der Halteplatte verbunden ist, indem der der Verteilerleiste abgewandte Kopf des jeweiligen Bolzens ein im Schnitt T-förmiges Halteelement bildet, das in in der Halteplatte eingeformten, im Schnitt kompementär zum Bolzenkopf ausgebildeten Führungsschienen in Richtung quer zur Verteilerleistenlängsachse verschiebbar geführt ist.

Auf diese Weise ist es möglich, nach Entriegelung der Verbindung zwischen Düsenplatte und Verteilerplatte, bzw. der Halteplatte die einzelnen Verteilerleisten, die in diesem Stadium von der Halteplatte herabhängen so zu verschieben, dass zwischen den einzelnen Leisten ein genügend großer Abstand hergestellt wird, so dass die in den einzelnen Leisten vorhandenen Kanalabschnitte für die Reinigung zugänglich sind.

Nach der Reinigung werden die einzelnen Verteilerleisten wieder zur Verteilerplatte zusammengeführt, die Düsenplatte nach oben bewegt und mit der Halteplatte verbunden, so dass die aus den einzelnen Verteilerleisten gebildete Verteilerplatte sandwichartig zwischen der Halteplatte und der Düsenplatte verriegelt ist.

Dadurch, dass nach Öffnen der Spritzgießmaschine die Verteilerleisten von der Halteplatte herabhängen und frei zugänglich sind, sodass sie in den Führungsschienen gegeneinander verschoben bzw. auseinandergeschoben werden können, ergibt sich die Möglichkeit, die Kanäle in den einzelnen leisten innerhalb der Maschine zu reinigen.

Somit ergibt sich der Vorteil, dass ohne Manipulationen durch einen Kran der Zeitaufwand zur Reinigung dieser Kanäle entscheidend verringert wird.

Denkbar ist auch, dass die einzelnen Verteilerleisten direkt in entsprechenden Führungsnuten in der oberen Formaufspannplatte gehalten und geführt sind.

Damit gewährleistet ist, dass die einzelnen Verteilerleisten auch aus der Maschine entnommen werden können, sind die Führungsnuten bzw. Führungsschienen endseitig offen ausgestaltet.

Zur Zuführung des plastifizierten Materials dient ein zentraler, die Halteplatte durchsetzender Angusskanal, der in der Verteilerplatte mündet.

Die Erfindung wird im Folgenden anhand von Zeichnungen dargestellt und erläutert.

Es zeigen:
- Figur 1:: Kaltkanalblock in Vorderansicht und in geöffnetem Zustand,
- Figur 2:: Kaltkanalblock gemäß Figur 1 in seitlicher Darstellung,
- Figur 3:: Kaltkanalblock in geschlossenem Zustand.

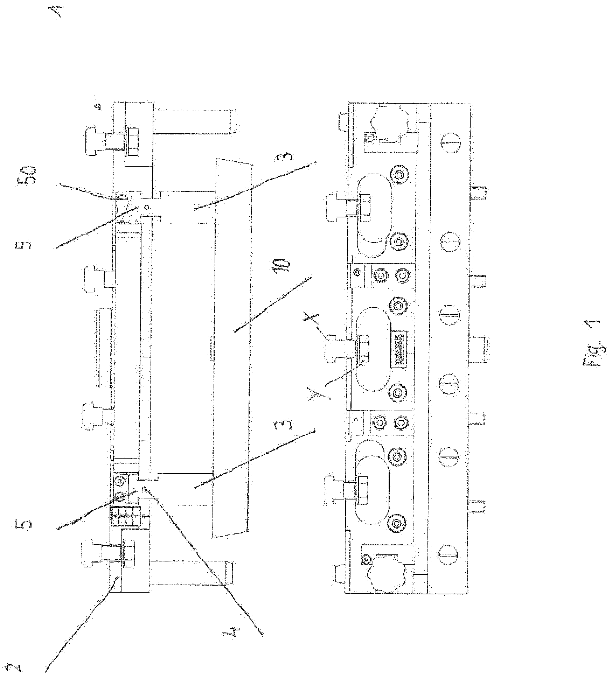

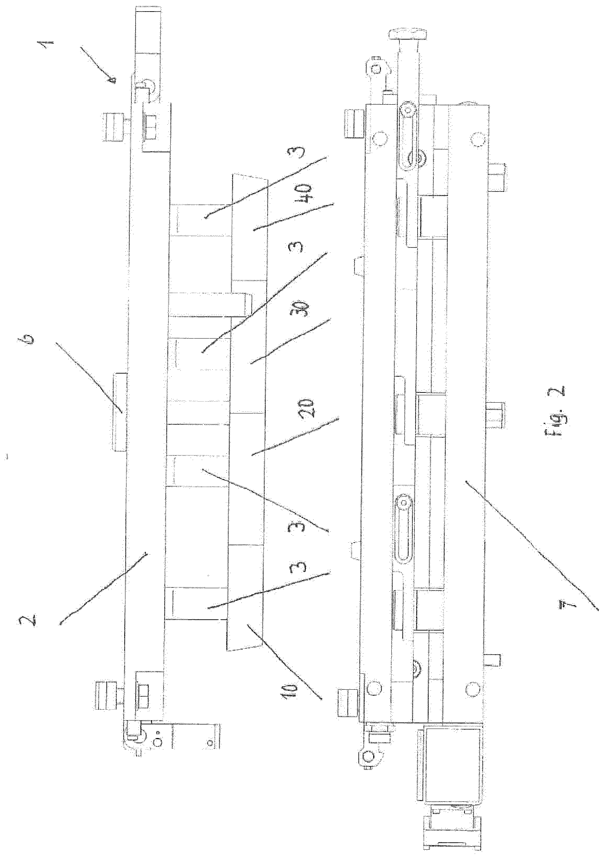

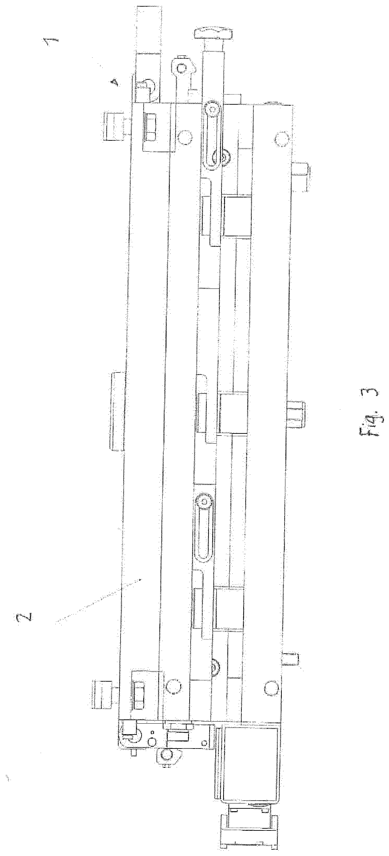

In den Figuren 1-3 ist ein Kaltkanalblock dargestellt und allgemein mit dem Bezugszeichen 1 versehen. Dieser Kaltkanalblock ist in einer nicht dargestellten Spritzgießmaschine zwischen einer oberen feststehenden Formaufspannplatte und einer darunter angeordneten beweglichen, ein Formwerkzeug tragende Formaufspannplatte angeordnet, die ebenfalls nicht dargestellt sind.

Der erfindungsgemäße Kaltkanalblock 1 ist aufgebaut aus einer Halteplatte 2, in deren Unterseite nutförmige Führungsschienen 50 eingeformt sind. In diesen Führungsschienen 50 werden Verteilerleisten 10-40 verschiebbar geführt, derart, dass die Verteilerleisten 10-40 mit Bolzen 3 versehen sind, an deren freien Enden 4 im Querschnitt T-förmige Bolzenköpfe 5 vorgesehen sind, die in den im Querschnitt komplementären Profilen der Führungsschienen 50 gehalten sind.

Die Verteilerleisten 10-40 bilden in zusammengeschobenem Zustand eine Verteilerplatte, in welcher die Verteilerkanäle (nicht dargestellt) vorgesehen sind, die über einen Angusskanal 6 von einem ebenfalls nicht dargestellten Plastifizier-und Einspritzaggregat beaufschlagt werden. Die Verteilerkanäle münden in Düsen, die das plastifizierte Material in im Formwerkzeug vorgesehene Formkavitäten einfüllen.

Die Düsen befinden sich in einer Düsenplatte 7, die unterhalb der Verteilerplatte angeordnet ist. Die Düsenplatte 7 wird über ein Verriegelungssystem, das aus Nutensteinen X und Schrauben Y besteht, mit der Halteplatte 2 verbunden, so dass zwischen der Halteplatte 2 und der Düsenplatte 7 sich die Verteilerplatte befindet.

Zur Reinigung werden die Formaufspannplatten auseinander gefahren, die Verriegelung des Kaltkanals 1 gelöst, sodass nach der Trennung von Halteplatte 2 und Düsenplatte 7 die Verteilerleisten 10-40 an der Halteplatte 2 frei herabhängend zugänglich sind. Zur Reinigung werden die Verteilerleisten 10-40 relativ zueinander in den Führungsschienen 50 verschoben, so das zwischen den einzelnen Verteilerleisten genügend Abstand ist, der es ermöglicht, die in den Verteilerleisten 10-40 vorhandenen Verteilerkanäle reinigen zu können. (Die Leisten können auch komplett entnommen werden)

Die Führungsnuten 50 sind endseitig offen ausgestaltet, so dass die einzelnen Verteilerleisten 10-40 bei Bedarf aus der Maschine entnommen werden können.

### Bezugszeichenliste

- 1: Kaltkanalblock
- 2: Halteplatte
- 3: Bolzen
- 4: Freies Ende des Bolzens
- 5: Bolzenkopf
- 6: Angusskanal
- 7: Düsenplatte
- 10: Verteilerleiste
- 20: Verteilerleiste
- 30: Verteilerleiste
- 40: Verteilerleiste
- 50: Führungsschiene
- X: Nutenstein
- Y: Schraube

## Patentansprüche

1. Kaltkanalblock in einer vertikal arbeitenden Spritzgießmaschine zur Verarbeitung von elastomeren Materialien mit einer oberen feststehenden Formaufspannplatte und einer darunter angeordneten relativ zur feststehenden Formaufspannplatte beweglichen Formaufspannplatte, zwischen denen ein eine Vielzahl von Formnestern aufweisendes Formwerkzeug angeordnet ist und wobei zwischen der feststehenden Formaufspannplatte und dem Formwerkzeug der Kaltkanalblock angeordnet ist, der eine die Kaltkanäle aufweisende Verteilerplatte und eine Düsenplatte beinhaltet, deren Düsen jeweils einem der mehreren Formnester zugeordnet sind,
**dadurch gekennzeichnet, dass** die aus mehreren Verteilerleisten (10-40) gebildete Verteilerplatte an einer an der feststehenden, angussseitigen Formaufspannplatte befestigbaren Halteplatte (2) angeordnet ist, derart, dass jede Verteilerleiste (10-40) mittels zweier Bolzen (3) mit der Halteplatte (2) verbunden ist, indem der der Verteilerleiste (10-40) abgewandte Kopf (5) des jeweiligen Bolzens (3) ein im Schnitt T-förmiges Halteelement bildet, das in in der Halteplatte (2) eingeformten, im Schnitt komplementär zum Bolzenkopf (5) ausgebildeten Führungsschienen (50) in Richtung quer zur Verteilerleistenlängsachse verschiebbar geführt ist.

2. Kaltkanalblock nach Anspruch 1, **dadurch gekennzeichnet, dass** ein zentraler die Halteplatte (2) durchsetzender, in der Verteilerplatte mündender Angusskanal (6) vorgesehen ist.

3. Kaltkanalblock nach einem der Ansprüche 1 oder 2, **dadurch gekennzeichnet, dass** die die Verteilerleisten (10-40) tragenden Bolzen (3) mit vertikalem Spiel in den Führungsnuten (50) auf-und abbewegbar angeordnet sind.

## Claims

1. A cold runner block in a vertically operating injection molding machine for processing elastomer materials with an upper fixed molding platen and a molding platen arranged thereunder which is movable relative to the fixed molding platen, between which a molding tool having a plurality of mold cavities is arranged and wherein the cold runner block is arranged between the fixed molding platen and the molding tool, the cold runner block containing a distribution plate having the cold runners and containing a nozzle plate with nozzles each assigned to one of the plurality of mold cavities,
**characterized in that** the distribution plate formed from a plurality of distribution strips (10-40) is arranged on a retaining plate (2), which can be fastened to the fixed, feed-side molding platen, in such a way that each distribution strip (10-40) is connected by means of two bolts (3) to the retaining plate (2) **in that** the head (5) of each bolt (3) facing away from the distribution strip (10-40) forms a retaining element which is T-shaped in section, the retaining element being displaceably guided in the direction transverse to the distribution strip's longitudinal axis in guide rails (50) which are formed in the retaining plate (2) and are designed in section to complement the bolt head (5).

2. The cold runner block according to claim 1, **characterized in that** a central runner (6) is provided which passes through the retaining plate (2) and leads into the distribution plate.

3. The cold runner block according to one of claims 1 or 2, **characterized in that** the bolts (3) supporting the distribution strips (10-40) are arranged in the guide grooves (50) with vertical play such that they can be moved up and down.

## Revendications

1. Bloc de canaux froids dans une machine de moulage par injection travaillant verticalement pour le traitement de matériaux élastomères avec une plaque de serrage de moule supérieure fixe et une plaque de serrage de moule agencée en dessous, mobile par rapport à la plaque de serrage de moule fixe, entre lesquelles est agencé un outil de moulage présentant une pluralité de cavités de moule et le bloc de canaux froids étant agencé entre la plaque de serrage de moule fixe et l'outil de moulage, lequel contient une plaque de distribution présentant les canaux froids et une plaque de buses, dont les buses sont respectivement associées à l'une des plusieurs cavités de moule,
**caractérisé en ce que** la plaque de distribution formée de plusieurs barres de distribution (10-40) est agencée sur une plaque de maintien (2) pouvant être fixée sur la plaque de serrage de moule fixe, côté coulée, de telle sorte que chaque barre de distribution (10-40) est reliée à la plaque de maintien (2) au moyen de deux boulons (3), par le fait que la tête (5) du boulon respectif (3), détournée de la barre de distribution (10-40), forme un élément de maintien en forme de T en coupe, qui est guidé de manière à pouvoir coulisser dans des rails de guidage (50) formés dans la plaque de maintien (2), configurés en coupe de manière complémentaire à la tête de boulon (5), dans une direction transversale à l'axe longitudinal de la barre de distribution.

2. Bloc de canaux froids selon la revendication 1, **caractérisé en ce qu'**un canal de coulée (6) central traversant la plaque de maintien (2), débouchant dans la plaque de distribution, est prévu.

3. Bloc de canaux froids selon l'une quelconque des revendications 1 ou 2, **caractérisé en ce que** les boulons (3) portant les barres de distribution (10-40) sont agencés de manière à pouvoir se déplacer vers le haut et vers le bas avec un jeu vertical dans les rainures de guidage (50).
